# EUROPEAN PATENT APPLICATION

(11) **EP 2 908 053 A1**
(43) Date of publication of application: **19.08.2015**
(21) Application number: 13847007.5
(22) Date of filing: 01.10.2013
(51) Int. Cl.: F23K 5/00, F16K 3/04, F16K 3/06, F23N 1/00, F16K 31/04

(54) **GAS CONTROL VALVE, AND DISK COMPONENT USING SAME**

(30) Priority: 15.10.2012 JP 2012228133
(71) Applicant: Mikuni Corporation, Tokyo 101-0021 (JP)
(72) Inventor: SATO, Hirokazu, Takizawa-shi, Iwate 020-0643 (JP); OKUDERA, Taichi, Takizawa-shi, Iwate 020-0643 (JP)
(74) Representative: Vossius & Partner Patentanwälte Rechtsanwälte mbB
(86) International application number: PCT/JP2013/076671
(87) International publication number: WO 2014/061441

(57) **Abstract**

A rotation-side communication hole (24) includes a minimum throttle segment (24a) formed as a groove having a predetermined length with a constant width and a constant depth, an intermediate throttle segment (24b) formed as a groove with a gradually-varying width, and an opening segment (24c) formed as a through-hole, fuel gas supplied from a gas passage to the opening segment (24c) is allowed to flow to a fixed-side communication hole (23) through the groove of the intermediate throttle segment (24b) and the groove at a position of the minimum throttle segment (24a) that is not faced to the fixed-side communication hole (23) when a portion of the minimum throttle segment (24a) is faced to the fixed-side communication hole (23), thereby enabling a minimum gas flow rate to be adjusted in accordance with a degree of passage resistance corresponding to the length of a non-faced portion (24a') of the minimum throttle segment (24a).

## Description

### TECHNICAL FIELD

The present invention relates to a gas control valve to control a supply amount of fuel gas to gas equipment and a disk component to be used therefor.

### BACKGROUND ART

In general, gas equipment is provided with a heat power control apparatus (gas control valve) to control heat power of a gas burner by increasing and decreasing a gas supply amount to the gas burner. There has been known a gas control valve that includes a fixed disk and a rotational disk to be rotated in a state of being intimately contacted to the fixed disk and that a gas supply amount is controlled while a hole formed at the fixed disk and a hole formed at the rotational disk are faced (for example, see Patent Documents 1 and 2).

A minimum gas flow rate in the order of preventing a flame of a gas burner from being extinguished varies in accordance with types of fuel gas (LP gas or utility gas) having different heat generation amounts and specific gravities and types of gas burners having different combustion capabilities. Therefore, the minimum gas flow rate is required to be set for each type of fuel gas to be used and the gas burner to be used. The gas control valves disclosed in Patent Documents 1 and 2 are devised regarding the abovementioned issue as well.

As illustrated in FIG. 4 of Patent Document 1, in the gas control valve disclosed in Patent Document 1, a valve-opening hole 81 is formed at an open-close plate 8 (rotational disk) as penetrating vertically. Meanwhile, a plurality of gas passage holes 91 are formed at a gas passage plate 9 (fixed disk) as penetrating vertically as well. When the open-close plate 8 is rotated, the valve-opening hole 81 is matched with any of the gas passage holes 91. Then, gas flows upward through the matched gas passage hole 91. Since the number and size of the gas passage holes to be matched with the valve-opening hole 81 are varied in accordance with rotation of the open-close plate 8, the flow rate of the gas flowing upward is increased and deceased. Here, an orifice plate 93 is attached onto an upper face of the gas passing plate 9. The orifice plate 93 adjusts a gas amount in accordance with the gas type especially in the case that gas flows at a flow rate corresponding to medium heat to low heat. Accordingly, it is simply required to change the orifice plate 93 for a different type of gas.

As illustrated in FIGs. 1 and 2 of Patent Document 2, in the gas control valve disclosed in Patent Document 2, five holes 51 to 55 being a first communication hole as having different opening area from one another are formed at a fixed disk 5 on the same circle in a continuous fashion. Meanwhile, an oval second communication hole 41 is formed at a rotational disk 4. As a rotation shaft 3 is rotated by a predetermined angle, the second communication hole 41 is matched with each of holes 51 to 55 and allows a gas inflow port 23 and a gas outflow portion 24 to communicate via an inner passage 21.

Here, for enabling the minimum gas flow rate to be set for each gas type and each gas burner, a bypass passage 13 that provides communication between the first hole 51 of the first communication hole and a gas passage 11 is formed at a main body 12 and an orifice 14 that defines the minimum gas flow rate is inserted to the bypass passage 13. Here, when the second communication hole 41 is matched with the first hole 51 of the first communication hole by rotating the rotational disk 4 with driving of a motor 3, gas flows through the orifice 14 at the minimum gas flow rate in the order of preventing a flame of the gas burner from being extinguished.
Patent Document 1: Japanese Patent No. 4128179
Patent Document 2: Japanese Patent No. 3819307

In general, gas equipment is set with a different gas amount in accordance with respective gas types and gas burners. In particular, setting of a minimum heat power (minimum gas flow rate) is performed with a size of a hole at a gas control valve not with a size of a nozzle at gas equipment. Normally, to control a minimum gas flow rate at 0.3 to 0.4 kW for a home-use stove in a stable state, adjustment of the minimum gas flow rate is performed with a dedicated orifice as disclosed in Patent Documents 1 and 2. Here, it has been required to prepare a large number of orifices as dedicated components separately used for the respective gas types and gas burners. Accordingly, there has been a problem of high manufacturing costs and inventory costs.

Further, there may be a case that the gas type is to be changed when an owner of gas equipment moves to a new address. In this case, it is required to change an orifice in the gas control valve. Here, in the gas control valve disclosed in Patent Document 1, it is required to detach main gas passage components when changing the orifice. Further, it is also required to check reliability of gas tight after reassembling. Thus, there has been a problem that the operation for changing the gas type becomes complicated.

With the gas control valve disclosed in Patent Document 2, orifice changing can be performed without detaching main gas passage components, so that the operation can be performed relatively easily compared to Patent Document 1. However, even though the operation is relatively easy, there still has been a problem of a certain level of burden that orifice changing and gas tight reliability confirming must be performed. Further, with the structure disclosed in Patent Document 2, there also has been a problem of cost increase due to necessity of orifice accessories such as sealing members.

Further, as illustrated in Patent Documents 1 and 2, with the structure to control a gas flow rate by forming the plurality of differently-sized holes at the fixed disk and facing the hole formed at the rotational disk to any thereof, heat power adjustment can be performed stepwise only corresponding to the number of the holes. Furthermore, it is required to widen pitches of the holes to ensure an allowable range of errors of motor stopping. Accordingly, there has been a problem that an adjustment range of heat power (number of heat power switching steps) is limited.

### SUMMARY OF THE INVENTION

To address the above issues, an object of the present invention is to enable to perform adjustment of a minimum gas flow rate without preparing dedicated components to be used separately for the respective gas types and gas burners. Further, another object of the present invention is to enable to perform heat power switching continuously from the minimum heat power to the maximum heat power.

To solve the abovementioned problems, the present invention provides a gas control valve to control a supply amount of fuel gas to a gas burner by allowing the fuel gas to flow through a fixed-side communication hole formed at a fixed disk and a rotation-side communication hole formed at a rotational disk that is rotated in a state of being intimately contacted to the fixed disk. Here, one of the fixed-side communication hole and the rotation-side communication hole includes a minimum throttle segment formed as a groove having a predetermined length with a constant width and a constant depth, an intermediate throttle segment formed as a groove, at least one of a width and a depth of which is gradually varied, and an opening segment formed as a through-hole. Further, the minimum throttle segment, the intermediate throttle segment, and the opening segment are continuously formed.

According to the present invention structured as described above, for example, in a case that the rotation-side communication hole of the rotational disk is configured to include the minimum throttle segment, the intermediate throttle segment, and the opening segment, fuel gas flows as follows. When a portion of the minimum throttle segment of the rotation-side communication hole that is formed at the rotational disk is faced to the fixed-side communication hole that is formed at the fixed disk with rotation of the rotational disk, fuel gas supplied from the gas passage to the opening segment of the rotation-side communication hole flows toward the fixed-side communication hole through the groove of the intermediate throttle segment and the groove at a portion of the minimum throttle segment that is not face to the fixed-side communication hole.

Here, the length of the groove at a portion of the minimum throttle segment that is not faced to the fixed-side communication hole (groove at a non-faced portion) varies in accordance with a position of the minimum throttle segment to be faced to the fixed-side communication hole. The flow rate of fuel gas to be supplied from the rotation-side communication hole to the fixed-side communication hole is determined by a degree of passage resistance that corresponds to the groove length of the non-faced portion of the minimum throttle segment. Accordingly, it is possible to adjust the minimum gas flow rate by controlling the position of the minimum throttle segment to be faced to the fixed-side communication hole in accordance with the respective gas types and gas burners. Thus, according to the present invention, the minimum gas flow rate can be adjusted without preparing dedicated components (dedicated orifices) to be used separately for the respective gas types and gas burners.

Further, according to the present invention, the minimum throttle segment, the intermediate throttle segment, and the opening segment are continuously arranged. Accordingly, the flow rate of gas to be supplied to the gas burner can be controlled from the minimum gas flow rate with the minimum throttle segment faced to the fixed-side communication hole to the maximum gas flow rate with the opening segment faced to the fixed-side communication hole via the intermediate flow rate with the intermediate throttle segment faced to the fixed-side communication hole. Thus, according to the present invention, switching of heat power can be performed continuously from the minimum heat power to the maximum heat power.

### BRIEF DESCRIPTION OF THE DRAWINGS

FIG. 1 is a view illustrating a gas passage of gas equipment using a gas control valve according to the present embodiment.
FIG. 2 is a sectional view of the gas control valve according to the present embodiment.
FIG. 3 is a view illustrating a structural example of a fixed-side communication hole and a rotation-side communication hole of the gas control valve at line A-A in FIG. 2.
FIG. 4 is a view illustrating an example of heat power adjustment with the gas control valve of the present embodiment as illustrating a relation between heat power and faced positions of the fixed-side communication hole and the rotation-side communication hole.
FIG. 5 is a graph indicating a relation between a rotational angle of a rotational disk and heat power according to the present embodiment.
FIG. 6 is a graph indicating a relation between a rotational angle of the rotational disk and passage area according to the present embodiment.
FIG. 7 is a view illustrating a structural example of a correction mechanism according to the present embodiment.

### EMBODIMENT OF THE INVENTION

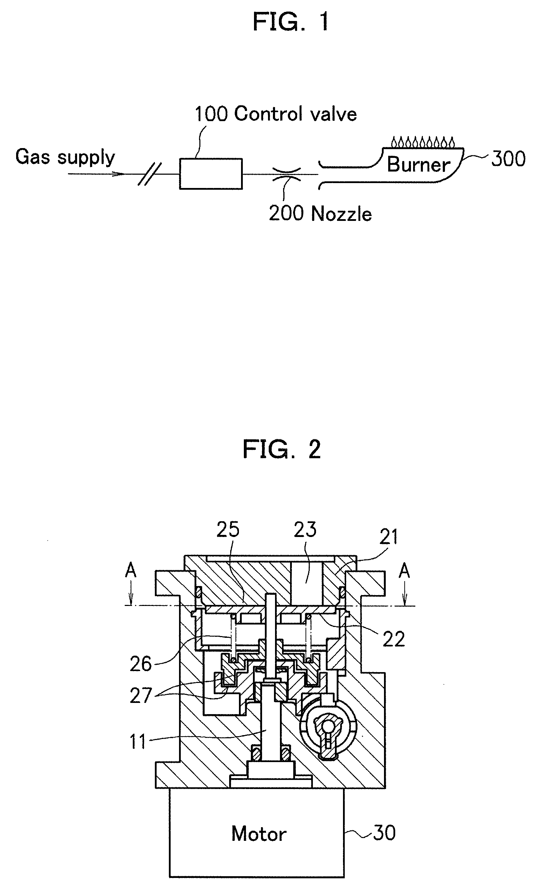

In the following, an embodiment of the present invention will be described with reference to the drawings. FIG. 1 is a view illustrating a gas passage of gas equipment using a gas control valve according to the present embodiment. As illustrated in FIG. 1, a gas control valve 100 of the present embodiment is to be applied to gas equipment such as a gas stove. The gas control valve 100 adjusts heat power of a gas burner 300 by increasing and decreasing a gas supply amount to the gas burner 300 via a nozzle 200 of the gas equipment.

FIG. 2 is a sectional view of the gas control valve 100 according to the present embodiment. As illustrated in FIG. 2, the gas control valve 100 of the present embodiment is configured to control a supply amount of fuel gas to the gas burner 300 by allowing fuel gas to pass through a fixed-side communication hole 23 formed at a fixed disk 21 and a rotation-side communication hole (not illustrated in FIG. 2) formed at a rotational disk 22 that is rotated in a state of being intimately contacted to the fixed disk 21.

The rotational disk 22 is urged upward in the drawing by a spring 26 to form an intimate contact face 25 with the fixed disk 21. The fixed-side communication hole 23 formed at the fixed disk 21 is a through-hole having constant opening area. Meanwhile, the rotation-side communication hole formed at the rotational disk 22 is shaped to be capable of controlling a gas flow rate toward the fixed-side communication hole 23 in accordance with rotation of the rotational disk 22. Details thereof will be described later.

In the present embodiment, the rotational disk 22 corresponds to a disk component of the present invention and the rotation-side communication hole corresponds to a communication hole of the present invention. Further, the fixed-side communication hole 23 of the fixed disk 21 corresponds to another communication hole.

Gas supplied from a gas passage (not illustrated) at the upstream side (from the right side in the drawing) are to be flown toward the gas burner side (upward in the drawing) via the rotation-side communication hole and the fixed-side communication hole 23. Here, a supply amount of fuel gas toward the gas burner 300 is controlled by allowing the gas to flow while an appropriate position of the rotation-side communication hole formed at the rotational disk 22 is faced to the fixed-side communication hole 23 by rotating the rotational disk 22 with the motor 30. That is, a flow rate of fuel gas to be supplied to the gas burner 300 is controlled in accordance with a position of the rotation-side communication hole being faced to the fixed-side communication hole 23.

Here, power of the motor 30 is transmitted to the rotational disk 22 via a power transmission disk 27 that is connected to a motor rotation shaft 11, so that the rotational disk 22 is rotated along with rotation of the motor 30. In addition to the motor rotation shaft 11, the power transmission disk 27 includes a power transmission member (not illustrated) to transmit power of the motor 30 to the rotational disk 22.

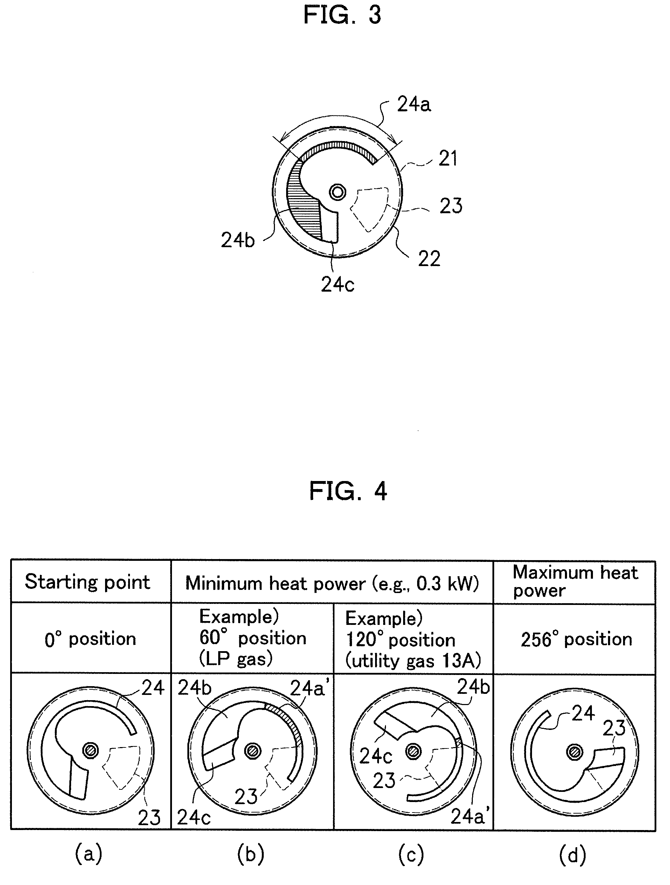

FIG. 3 is a sectional view of the gas control valve 100 at line A-A in FIG. 2. FIG. 3 illustrates a structural example of the fixed-side communication hole 23 of the fixed disk 21 and the rotation-side communication hole 24 (24a, 24b, 24c) of the rotational disk 22 of the present embodiment. As illustrated in FIG. 3, the fixed-side communication hole 23 formed at the fixed disk 21 is formed as a through-hole having constant opening area.

Meanwhile, the rotation-side communication hole 24 of the rotational disk 22 includes a minimum throttle segment 24a formed as a groove having a predetermined length with a constant width and a constant depth, an intermediate throttle segment 24b formed as a groove, at least one of a width and a depth of which is gradually varied, and an opening segment 24c formed as a through-hole. Here, the minimum throttle segment 24a, the intermediate throttle segment 24b, and the opening segment 24c are continuously formed. The rotational disk 22 is, for example, made of resin to facilitate processing of the grooves and the through-hole of the rotation-side communication hole 24.

FIG. 4 is a view illustrating an example of heat power adjustment with the gas control valve 100 of the present embodiment as illustrating relations between heat power and faced positions of the fixed-side communication hole 23 and the rotation-side communication hole 24. FIG. 4(a) illustrates a state that the rotation-side communication hole 24 is at a starting point (position where a rotational angle of the rotational disk 22 is zero). In this state, the fixed-side communication hole 23 and the rotation-side communication hole 24 are not faced at all, so that gas is not supplied from the rotation-side communication hole 24 to the fixed-side communication hole 23.

FIGs. 4(b) and 4(c) illustrate states of the rotation-side communication hole 24 in a case of setting at a minimum gas flow rate (minimum heat power) in the order of preventing a flame of the gas burner 300 from being extinguished. Here, FIG. 4(b) illustrates a case that the rotational angle of the rotational disk 22 is 60 degrees and FIG. 4 (c) illustrates a case that the rotational angle of the rotational disk 22 is 120 degrees.

A minimum gas flow rate varies in accordance with types of gas (LP gas or utility gas) and types of the gas burner 300. Here, setting examples are illustrated for the minimum gas flow rate that varies in accordance with types of gas on the presumption that the types of the gas burner 300 are the same. FIG. 4 (b) illustrates a setting example of the minimum gas flow rate for LP gas and FIG. 4 (c) illustrates a setting example of the minimum gas flow rate for utility gas 13A.

In the present embodiment, the minimum throttle segment 24a and the intermediate throttle segment 24b of the rotation-side communication hole 24 are formed as grooves to be connected to the opening segment 24c not as through-holes. Accordingly, when a portion of the minimum throttle segment 24a of the rotation-side communication hole 24 is faced to the fixed-side communication hole 23 as illustrated in FIG. 4(b) or FIG. 4(c), fuel gas supplied from the gas passage to the opening segment 24c of the rotation-side communication hole 24 flows toward the fixed-side communication hole 23 through the groove of the intermediate throttle segment 24b and the groove at a portion of the minimum throttle segment 24a that is not faced to the fixed-side communication hole 23 (groove at a non-faced portion 24a').

Here, the length of the non-faced portion 24a' of the minimum throttle segment 24a varies in accordance with a position of the minimum throttle segment 24a to be faced to the fixed-side communication hole 23. The flow rate of fuel gas to be supplied from the rotation-side communication hole 24 to the fixed-side communication hole 23 is determined by a degree of passage resistance that corresponds to the groove length of the non-faced portion 24a' of the minimum throttle segment 24a. Accordingly, it is possible to adjust the minimum gas flow rate by controlling the position of the minimum throttle segment 24a to be faced to the fixed-side communication hole 23 in accordance with types of gas, as illustrated in FIGs. 4(b) and 4(c).

FIG. 4(d) illustrates a state of the rotation-side communication hole 24 for setting at a maximum gas flow rate (maximum heat power). Here, the rotational angle of the rotational disk 22 is 256 degrees. In this state, the opening segment 24c is entirely faced to the fixed-side communication hole 23. Therefore, gas is supplied from the opening segment 24c toward the fixed-side communication hole 23 without passing through the intermediate throttle segment 24b and the minimum throttle segment 24a to provide the passage resistance.

In FIG. 4, illustration is skipped for a state of the rotation-side communication hole 24 in a case of setting at an intermediate gas flow rate (intermediate heat power). Detailed description will be provided later on adjustment of the intermediate heat power.

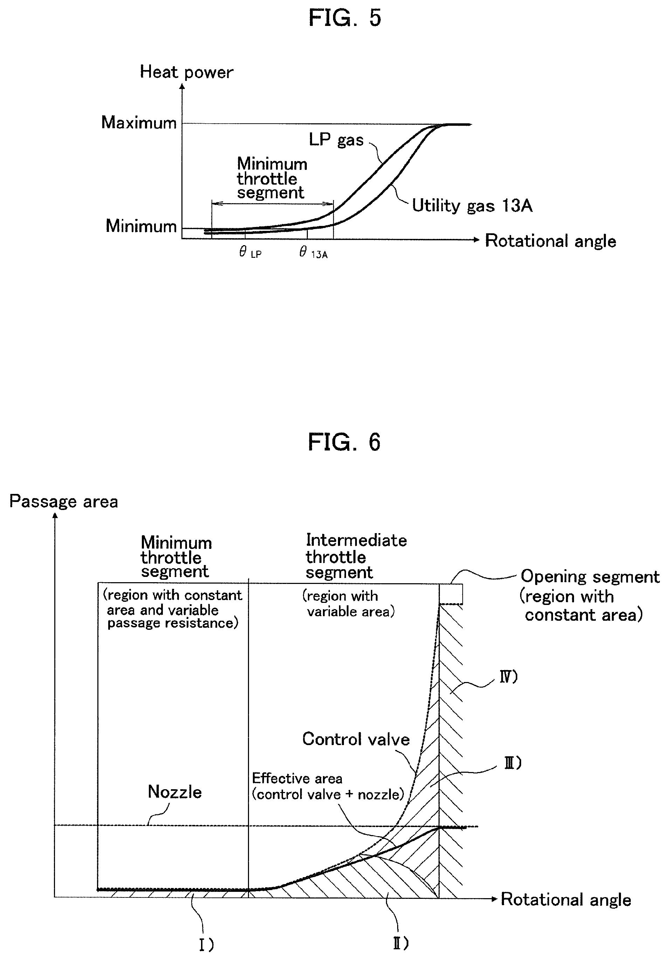

FIG. 5 is a graph indicating a relation between a rotational angle of the rotational disk 22 and heat power according to the present embodiment. In the present embodiment, the minimum throttle segment 24a, the intermediate throttle segment 24b, and the opening segment 24c are continuously arranged. Accordingly, the flow rate to be supplied to the gas burner 300 can be controlled from the minimum gas flow rate with the minimum throttle segment 24a faced to the fixed-side communication hole 23 to the maximum gas flow rate with the opening segment 24c faced to the fixed-side communication hole 23 via the intermediate gas flow rate with the intermediate throttle segment 24b faced to the fixed-side communication hole 23. Thus, as illustrated in FIG. 5, switching of heat power can be performed continuously from the minimum heat power to the maximum heat power.

In the present embodiment, since the minimum throttle segment 24a is formed as a narrow groove having a constant width and a constant depth, a variation amount of the heat power is gradual against a variation amount of the rotational angle of the rotational disk 22. That is, it is possible to actualize a small variation region where the gas variation amount is small against the rotation amount of the motor 30. Accordingly, it is possible to allow an error of motor stopping while reducing influence thereof to gas amount accuracy. Therefore, it is possible to control the minimum gas flow rate appropriately and accurately in a stable state in accordance with combination of a variety of gas types and gas burners.

In contrast, since the intermediate throttle segment 24b is formed as the groove, at least one of the width and the depth of which is gradually varied, a variation amount of the heat power against a variation amount of the rotational angle of the rotational disk 22 becomes large. Accordingly, it is possible to provide better responsiveness of the variation amount of the heat power against the rotational amount of the rotational disk 22 at the intermediate heat power or higher where heat power accuracy thereat is less required than that at the minimum heat power (minimum gas flow rate).

Here, in view of component accuracy and manufacturing easiness, it is preferable for the intermediate throttle segment 24b that the width of the groove is gradually varied while the depth thereof is kept constant. Since the maximum heat power is determined by the size of a nozzle 200 of the gas equipment, it is simply required for the opening segment 24c to have passage area to the extent preventing occurrence of pressure loss.

FIG. 6 is a graph indicating a relation between the rotational angle of the rotational disk 22 and passage area according to the present embodiment. FIG. 6 includes three graphs regarding passage area of the gas control valve 100, passage area of the nozzle 200 of the gas equipment, and later-mentioned effective area provided by the two throttles thereof. The graph regarding the passage area of the gas control valve 100 is illustrated as being divided into four regions of I) to IV) corresponding to faced positions of the minimum throttle segment 24a, the intermediate throttle segment 24b, and the opening segment 24c of the rotation-side communication hole 24 and the fixed-side communication hole 23.

As illustrated in FIG. 1, the gas control valve 100 and the nozzle 200 of the gas equipment are serially connected. The effective area denotes gas passage area on the assumption that serial throttles structured with the gas control valve 100 (variable throttle) and the nozzle 200 (fixed throttle) serve as a single throttle as a whole. Here, if the pressure of gas to be supplied and passage resistance (flow coefficient) are constant, a gas flow rate is proportional to the effective area.

Next, description will be performed on throttling performance (from the minimum gas flow rate to the maximum gas flow rate) required for the gas control valve 100. In the present embodiment, LP gas and utility gas 13A are adopted as examples of gas types to be used. In this case, the minimum gas flow rate is determined for LP gas and the maximum gas flow rate is determined for utility gas 13A. This is because a gas flow rate of LP gas is smaller than a gas flow rate of utility gas 13A to obtain the same heat amount as a gas stove.

Since throttle area of the gas control valve 100 is sufficiently smaller than that of the nozzle 200, the minimum gas flow rate is determined by the gas control valve 100. In general, a throttle of a home-use stove for LP gas is about φ0.3.

In contrast, the maximum gas flow rate is determined by the area of the nozzle 200. Here, the throttle of the gas control valve 100 is required to be opened to have sufficiently large area so as not to cause pressure loss at the gas control valve 100. In consideration of nozzle area of a general home-use stove (having capacity of about 4 kW) for utility gas 13A, the throttle in the gas control valve 100 is opened to about φ3. Accordingly, the throttling performance (φ0.3 to φ3) required for the gas control valve 100 becomes in the order of one hundredth in area ratio. The variation amount of the throttle area increases in an exponential fashion.

For obtaining the abovementioned throttling performance in the gas control valve 100, it is considerable to vary throttle area, for example, by sliding two plates. However, with such structure, dimensional errors of at least the two plates largely influence to accuracy of the throttle area, that is, accuracy of gas flow rate control. In particular, the influence becomes large with decrease of the gas flow rate to the minimum side. In contrast, in the present embodiment, it is structured that passage area larger than φ0.3 not relying on the throttle area is set at the control position of the minimum gas flow rate to throttle to a desired gas flow rate corresponding to an orifice of φ0.3 with a degree of passage resistance.

Next, description will be provided on regions I) to IV) illustrated in FIG. 6.
I) A region with constant passage area and variable passage resistance due to the minimum throttle segment 24a
II) A region with variable passage area due to the intermediate throttle segment 24b
III) A region with variable faced-area of a portion of the opening segment 24c and the fixed-side communication hole 23
IV) A region with constant faced-area of the entire opening segment 24c and the fixed-side communication hole 23

Region I) is a region where the minimum throttle segment 24a and the fixed-side communication hole 23 are faced. In this region, although the passage area of the minimum throttle segment 24a is constant, the passage resistance thereof is varied in accordance with the length of the non-faced portion 24a'. The small variation region where the gas variation amount is small against the rotational angle of the motor can be actualized as illustrated in FIG. 5 by varying the passage resistance.

Here, supplementary explanation is provided on the length of the minimum throttle segment 24a. In the case with gas, to obtain the effect of the passage resistance to actualize the small variation region, it is required that the passage length is sufficiently large compared to the passage area. In the present embodiment, the ratio of the orifice φ (passage area) to the passage length is set in a range between 1 to 20 and 1 to 30. In the present embodiment, the minimum throttle segment 24a is formed as a groove having a rectangular section. Here, the passage area of the minimum throttle segment 24a is converted into φ for the sake of convenience.

The intermediate throttle segment 24b provides a composite region that defines region II) and region III), that is in other words, a transition region from region II) to region III). In region II) where the intermediate throttle segment 24b formed as the groove having the gradually-varying width is faced to the fixed-side communication hole 23, the passage area is gradually varied. Further, in region III) where a portion of the opening segment 24c starts to be faced to the fixed-side communication hole 23 in addition to the intermediate throttle segment 24b, gas flows from the opening segment 24c without passing through the groove of the intermediate throttle segment 24b.

Thus, better responsiveness is provided by enlarging gas amount variation against the rotational angle of the motor at the intermediate gas flow rate or higher where heat power control accuracy thereat is less required than that at the minimum gas flow rate. For enlarging gas amount variation, it is required, as described above, to enlarge the passage area variation of the gas control valve 100 in an exponential fashion against the rotational angle of the motor as approaching the maximum gas flow rate. Here, region II) has a structure that the groove width of the intermediate throttle segment 24b is gradually varied and region III) has a structure to vary the faced area of the opening segment 24c and the fixed-side communication hole 23.

Region IV) is a region for the maximum gas flow rate. In this region, the opening segment 24c is entirely faced to the fixed-side communication hole 23. As described above, the maximum gas flow rate is determined by the nozzle 200 of the gas equipment and the throttle of the gas control valve 100 is in an opened state so as not to cause pressure loss thereat.

As described above in detail, according to the present embodiment, the minimum gas flow rate can be adjusted in accordance with the respective gas types and gas burners by controlling a position of the minimum throttle segment 24a to be faced to the fixed-side communication hole 23. Accordingly, it is not required to prepare a large number of orifices as dedicated components to be used separately for the respective gas types and gas burners, so that manufacturing costs and inventory costs can be remarkably reduced. Further, even when a gas type is changed, the orifice is not required to be changed. Accordingly, the operation for gas type changing can be facilitated. Further, according to the present embodiment, switching of heat power can be performed continuously from the minimum heat power to the maximum heat power. Accordingly, it is possible to solve the conventional problem that a heat power adjustment range (switching steps of heat power) is limited.

In the description of the abovementioned embodiment, the fixed-side communication hole 23 of the fixed disk 21 is formed as the through-hole having constant opening area and the rotation-side communication hole 24 of the rotational disk 22 is shaped to be capable of controlling a gas flow rate. However, those may be reversed. That is, a rotation-side communication hole of the rotational disk 22 may be a through-hole having constant opening area and a fixed-side communication hole of the fixed disk 21 may be shaped to be capable of controlling a gas flow rate. In this case, the fixed disk 21 corresponds to the disk component of the present invention and the fixed-side communication hole corresponds to the communication hole of the present invention. Further, the rotation-side communication hole of the rotation-side communication hole 24 corresponds to another communication hole.

Further, in a case that high accuracy is required for the minimum heat power, for example, with a high-end gas stove, it is possible to arrange a correction mechanism that enables to perform fine adjustment of faced positions of the fixed-side communication hole 23 and the rotation-side communication hole 24. This is because there may be a case that the minimum heat power cannot be adjusted at high accuracy to satisfy a high requirement level only by rotating the rotational disk 22 with the motor 30 caused by limitation of manufacturing accuracy of each component.

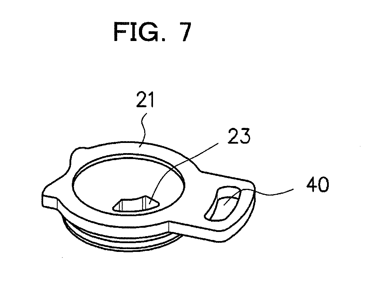

FIG. 7 is a view illustrating a structural example of the correction mechanism. FIG. 7 illustrates an example in which the correction mechanism is arranged at the fixed disk 21. As illustrated in FIG. 7, a screw hole 40 for fixing the fixed disk to the main body of the gas control valve 100 is formed at the fixed disk 21. The screw hole 40 is not shaped circular but oblong (shaped to be an elongated hole) so that an attaching position to the main body of the gas control valve 100 can be adjusted. The screw hole 40 corresponds to the correction mechanism.

The fine adjustment of the faced position using the screw hole 40 is performed as follows. That is, in the assembling process of the gas control valve 100, the fixed disk 21 is temporarily fixed to the main body, the rotational disk 22 is rotated while monitoring a signal from a position sensor that outputs the signal in synchronization with rotation of the motor rotation shaft 11, and causes the minimum throttle segment 24a to stop at a faced position for providing the required minimum gas flow rate.

Then, owing to manually rotating the fixed disk 21 with reference to the position of the stopped minimum throttle segment 24a (the position indicated by the position sensor that is synchronized with the motor rotation shaft 11), the position of the fixed-side communication hole 23 against the rotation-side communication hole 24 is corrected. After the fixed disk 21 is adjusted at the position to provide the minimum gas flow rate that is really required, the fixed disk 21 is fixed with a screw to the main body.

In another embodiment, anodizing may be performed at least on the intimate contact face 25 of the fixed disk 21 or the rotational disk 22. In this case, it is possible to reduce friction between faced faces (intimate contact faces 25) made of different materials respectively (for example, the fixed disk 21 made of metal and the rotational disk 22 made of resin), so that unlubricated sliding can be actualized.

The abovementioned embodiments are simply examples of actualization of the present invention. The technical scope of the present invention should not be construed in a limited way thereby. The present invention may be actualized variously without departing from the scope or the primary features of the present invention.

### EXPANATION OF REFERENCES

- 21: Fixed disk
- 22: Rotational disk
- 23: Fixed-side communication hole
- 24: Rotation-side communication hole
- 24a: Minimum throttle segment
- 24b: Intermediate throttle segment
- 24c: Opening segment
- 25: Intimate contact face

## Claims

1. A gas control valve to control a supply amount of fuel gas to a gas burner by allowing the fuel gas to flow through a fixed-side communication hole formed at a fixed disk and a rotation-side communication hole formed at a rotational disk that is rotated in a state of being intimately contacted to the fixed disk,
wherein one of the fixed-side communication hole and the rotation-side communication hole includes a minimum throttle segment formed as a groove having a predetermined length with a constant width and a constant depth, an intermediate throttle segment formed as a groove, at least one of a width and a depth of which is gradually varied, and an opening segment formed as a through-hole, and
the minimum throttle segment, the intermediate throttle segment, and the opening segment are continuously formed.

2. The gas control valve according to claim 1,
wherein the minimum throttle segment, the intermediate throttle segment, and the opening segment are formed as the rotation-side communication hole, and
the fixed disk includes a correction mechanism that enables to correct a position of the fixed-side communication hole by rotating the fixed disk with reference to a position of the minimum throttle segment of the rotation-side communication hole when the rotational disk is stopped after being rotated.

3. The gas control valve according to claim 1,
wherein anodizing is performed at least on an intimate contact face of the fixed disk or the rotational disk.

4. A disk component to be used as a structural component of a gas control valve,
wherein a communication hole is formed for adjusting an amount of fuel gas flowing through the communication hole and an another communication hole that is formed at another facing disk component,
the communication hole includes a minimum throttle segment formed as a groove having a predetermined length with a constant width and a constant depth, an intermediate throttle segment formed as a groove, at least one of a width and a depth of which is gradually varied, and an opening segment formed as a through-hole, and
the minimum throttle segment, the intermediate throttle segment, and the opening segment are continuously formed.
